# EUROPEAN PATENT APPLICATION

(11) **EP 4 141 771 A1**
(43) Date of publication of application: **01.03.2023**
(21) Application number: 22192922.7
(22) Date of filing: 30.08.2022
(51) Int. Cl.: G06Q 20/38, G06Q 20/20, G06Q 30/02

(54) **A SYSTEM AND METHOD FOR RECORDING PAYMENT TRANSACTIONS FROM A PAYER TO A RECIPIENT**

(30) Priority: 31.08.2021 NL 2029085
(71) Applicant: Parnassus Europe B.V., 7631 AC Ootmarsum (NL)
(72) Inventor: Rottink, Gerhard Carlo Alfons, 7631 AC Ootmarsum (NL)
(74) Representative: de Jong, Maurits David

(57) **Abstract**

The invention relates to a system for recording payment transactions from a payer to a recipient, which system comprises:
- a payment transaction system for performing a payment transaction from a payer to a recipient, which payment transaction system is configured to record payment transaction data comprising relevant characteristics of at least one commercial offering related to the payment transaction;
- an identifying device for obtaining a unique payer identification provided by the payer;
- a processing device configured to receive the unique payer identification from the identifying device and to receive the payment transaction data from the payment transaction system, which processing device is configured to process the payment transaction data into a payment transaction dataset and link them to the unique payer identification;
- a data storage system for storing and retrieving payment transaction datasets received from the processing device and linked to the unique payer identification, which stored payment transaction datasets are retrievable only by the payer, with an exception for third-party access approved explicitly by the payer.

The invention also relates to a method for recording payment transactions from a payer to a recipient.

## Description

The invention relates to a system and method for recording payment transactions from a payer to a recipient.

In the payment traffic in supermarkets, the retail sector and other locations where commercial offerings such as services and products are sold the vendors often partake in data collection in regards to the transactions performed. As much information as possible about the consumer and their transactions is collected here. The vendor, the recipient of the payment transaction, for instance often utilizes a loyalty card to be able to link payment transactions to a uniquely identifiable paying consumer. A rewards system is in some cases operated for this purpose, wherein the consumer allowing themselves to be uniquely identified gains certain advantages, such as discounts.

A drawback of the existing systems is that the consumer who generates and makes available the relevant data through the payment transactions does not have the option of receiving appropriate compensation therefor. Because the consumer has no insight into which of the information collected about them will be used, and there is no insight either into the market value of this information, great financial gains are generated off the back of the consumer without the consumer being aware of this fact.

It is now an object of the invention to reduce or even obviate the above stated drawback. It is a particular object of the invention to provide a system for recording payment transactions from a payer to a recipient, wherein the payer controls who has access to the payment transaction datasets linked to the payer and stored by the system.

This object is achieved according to the invention with a system for recording payment transactions from a payer to a recipient, which system comprises:
- a payment transaction system for performing a payment transaction from a payer to a recipient, which payment transaction system is configured to record payment transaction data comprising relevant characteristics of at least one commercial offering related to the payment transaction;
- an identifying device for obtaining a unique payer identification provided by the payer;
- a processing device configured to receive the unique payer identification from the identifying device and to receive the payment transaction data from the payment transaction system, which processing device is configured to process the payment transaction data into a payment transaction dataset and link them to the unique payer identification;
- a data storage system for storing and retrieving payment transaction datasets received from the processing device and linked to the unique payer identification, which stored payment transaction datasets are retrievable only by the payer, with an exception for third-party access approved explicitly by the payer.

Because the payment transaction system, such as a cash register system, records payment transaction data which not only comprise the total amount but also relevant characteristics of a commercial offering related to the payment transaction, a digital receipt from which characteristics relevant for data analysis can be distilled can be created on the basis of the recorded data. One or more relevant characteristics can thus for instance be selected from the commercial offering characteristics per commercial offering, these being for instance a commercial offering description, EAN code, selling price, recommended retail price, product group, product segment, quantity, relative product placement, and whether or not an active special offer, which may or may not be personal, is applicable to the commercial offering.

The payment transaction data can be linked to the unique payer identification provided by the payer. This identification can for instance take place by means of a loyalty card offered to the payer and having a barcode such as a QR code, or by other means whereby the payer can be uniquely identified. The identifying device can for instance be provided with an input unit such as an optical reader for entering the unique identification into the identifying device. An NFC or RFID reader can also be used for this purpose.

The linking of payment transaction data to the unique payer identification provided by the payer can also be obtained using a device of the payer, such as for instance a mobile phone provided with an application configured to form the link. By means of the application the payment transaction data can be obtained from the payment transaction system, optionally using an Internet and/or cloud connection, by reading an identification linked to the payment transaction system and/or the payment transaction data, for instance in the form of a QR code printed on the physical receipt, arranged on the payment transaction system or shown on a display of the payment transaction system, such as for instance on the display of a payment terminal forming part of the payment transaction system. Instead of a QR code, the information exchange can also take place in other known ways, such as for instance by means of NFC.

When the payment transaction is completed by the payer by means of an e-wallet, for instance an e-wallet installed on the mobile phone of the payer, the payment can also be initiated by incorporating the above stated identification into the e-wallet, for instance in the form of said QR code. With the e-wallet both the payment transaction can be completed and the payment transaction data can be linked to the unique payer identification provided by the payer. Hereby, no separate steps need then be performed for the payment and for linking the payment transaction data to the payer identification.

The processing device provides for the processing and for instance encryption of the relevant payment transaction data, so that they can be stored on the basis of the unique payer identification. The processing device processes the payment transaction data into a payment transaction dataset for linking the payment transaction data to the unique payer identification. The payment transaction dataset then comprises the data as are for instance shown on a receipt, whereby the payment transaction dataset becomes a kind of digital receipt for the payment transaction.

The data storage system, such as for instance a cloud or decentralized storage system such as a blockchain, is configured here to store and retrieve the payment transaction datasets. By reserving access to the stored information to the payer, they themselves can remain in control of who is able to access the information contained in the datasets. It is only when the payer explicitly approves access for a third party that the information can be used by this third party. The disclosed information can for instance be offered up on a marketplace for information for monetary compensation.

The data storage system is preferably configured independently of the payment transaction system so that a plurality of payment transaction systems can be coupled to the data storage system in simple manner. The data from transactions carried out with different vendors can thus be collected.

In a preferred embodiment of a system according to the invention the data storage system is also configured so that the payer can make the stored payment transaction datasets conditionally and/or partially retrievable for third parties.

By configuring the data storage system for conditional and/or partial retrievability a good granularity can be obtained in the payer's choice as to which information will be disclosed for use by third parties. Making the payment transaction datasets conditionally retrievable makes it possible to link for instance a payment condition or condition of use to access to the payment transaction datasets. This can for instance be done by means of smart contracts in a blockchain, although the conditions can also be enforced by an intermediary broker platform.

Also according to the invention is an embodiment of a system wherein the processing device applies a cryptographic encryption to the payment transaction dataset with a cryptographic key linked to the payer for the purpose of guaranteeing that the payment transaction dataset is retrievable only by the payer.

In addition to encryption of possible communication between the different components of the system, it is specifically advantageous to enforce access to the payment transaction datasets by means of cryptographic encryption. This reduces the chance of unauthorized access to the payment transaction datasets. Any payer using the system can here rely on the strength of the cipher used, and there is thus no need for a basis of trust with any intermediary platform where the data are stored, offered or traded. As long as no permission has been granted by the payer making the cryptographic key needed for decoding available in relation to a third party, it will not be possible for this third party to use the payment transaction datasets. Not even when they end up in the hands of third parties in encrypted state.

Another embodiment of a system according to the invention is a system wherein the identifying device and the processing device are combined in the payment transaction system, such as a cash register.

Combining the identifying device and the processing device in the payment transaction system such as for instance a cash register makes it very simple for a payer to make use of the system because no personal equipment need be used therefor.

Alternatively, in an embodiment of the system according to the invention the identifying device and the processing device can conversely be combined in a device of the payer, such as for instance a mobile phone.

An advantage hereof is that the payer has an additional option of exerting control over what happens to the digital receipt. With such architecture it is also possible in very simple manner to provide encryption in the processing device and on the basis of a cryptographic key only available to the payer.

In yet another embodiment of a system according to the invention the payer identification is derived by the identifying device from at least one identification source selected from one one- or two-dimensional barcode, a source to be read by means of radio waves, such as for instance a source readable by means of RFID or NFC, or a virtual or physical payment card.

A great convenience of use can be achieved for the payer by means of a barcode or radiographically readable identification source, this increasing the chances of the system being used. The virtual or physical payment card used for performing the payment transaction is preferably simultaneously used as identification source for deriving the payer identification. A plurality of payment cards available to the payer can thus for instance, link back to the same unique payer identification.

The invention also relates to a method for recording payment transactions from a payer to a recipient, which method comprises of:
- performing a payment transaction from a payer to a recipient on a payment transaction system, which payment transaction system records payment transaction data comprising relevant characteristics of at least one commercial offering relating to the payment transaction;
- obtaining a unique payer identification provided by the payer by means of an identifying device;
- processing the unique payer identification received from the identifying device and the payment transaction data received from the payment transaction system into a payment transaction dataset linked to the unique payer identification by means of a processing device;
- storing the payment transaction dataset received from the processing device and linked to the unique payer identification in a data storage system, which data storage system is configured to store and retrieve payment transaction datasets linked to the unique payer identification, wherein the stored payment transaction datasets are retrievable only by the payer, with an exception for third-party access approved explicitly by the payer.

According to the method, the payment transaction system records payment transaction data which comprise more than just the total amount of the transaction. Other relevant characteristics of commercial offerings relating to the payment transaction are thus also recorded, as described in an embodiment of the system according to the invention.

Another method according to the invention is a method wherein the payer provides the unique payer identification after the payment transaction from the payer to the recipient has been carried out.

Giving the payer the option of providing the unique payer identification after the payment transaction is carried out gives the payer an explicit moment to choose whether the payment transaction should be recorded.

In a preferred embodiment of the method according to the invention the payer provides the unique payer identification when carrying out successive payment transactions from the payer to recipients.

By providing the same payer identification in different payment transactions with different recipients a collection of payment transaction datasets linked to the unique payer identification can be obtained. Such a collection is more valuable in any analyses than a collection of payment transaction datasets collected for a specific vendor, since it also includes information which could not have been obtained in data analysis solely on the basis of the commercial offering sold by the specific vendor.

The method according to the invention is preferably performed with a system according to the invention.

These and other features of the invention are further elucidated with reference to the accompanying drawings.
Figure 1 shows an embodiment of a system for recording payment transactions from a payer to a recipient according to the invention.
Figure 2 shows a flow diagram of an embodiment of a method for recording payment transactions from a payer to a recipient.

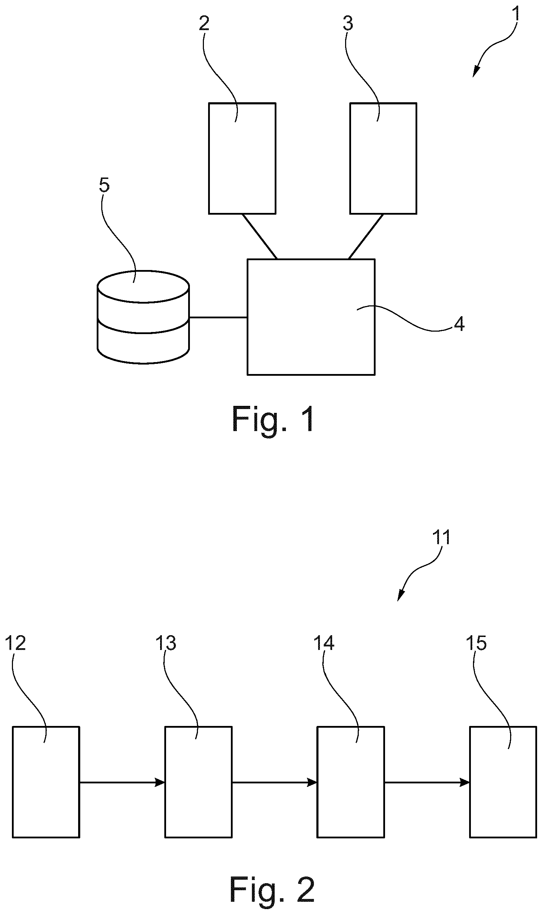

Figure 1 shows a system 1 according to the invention for recording payment transactions from a payer to a recipient. The system 1 comprises a payment transaction system 2, an identifying device 3 and a processing device 4. The payment transaction system 2 is for instance a cash register serving as front end for a payment transaction process in for instance a shop. Payment transaction system 2 records payment transaction data with relevant characteristics of commercial offerings related to the payment transaction. The identifying device 3 is configured to obtain a unique payer identification from a payer. The processing device 4 is configured to process the payment transaction data of the payment transaction into a payment transaction dataset and to link them to the unique payer identification. In this embodiment the payment transaction system 2 and the identifying device 3 are operatively coupled to the processing device 4 for the purpose of sending the unique payer identification and the payment transaction data to the processing device 4. System 1 also comprises a data storage system 5 which is operatively coupled to processing device 4 for the purpose of storing and retrieving payment transaction datasets received from processing device 4 and linked to the unique payer identification.

Figure 2 shows a flow diagram 10 of an embodiment of a method for recording payment transactions from a payer to a recipient. In the first step 12 a payment transaction from a payer to a recipient is carried out on a payment transaction system. The payment transaction system here records payment transaction data with relevant characteristics of commercial offerings related to the payment transaction. In the subsequent step 13 the payer provides a unique payer identification which is obtained by the identifying device. After the payment transaction data and the unique payer identification have been obtained, they are processed into a payment transaction dataset linked to the unique payer identification by means of the processing device in the processing step 14. The obtained payment transaction dataset is stored in the data storage system in the final step 15 of the method. The stored payment transaction datasets are here only retrievable by the payer, unless the payer explicitly grants access to a third party.

## Claims

1. A system for recording payment transactions from a payer to a recipient, which system comprises:
- a payment transaction system for performing a payment transaction from a payer to a recipient, which payment transaction system is configured to record payment transaction data comprising relevant characteristics of at least one commercial offering related to the payment transaction;
- an identifying device for obtaining a unique payer identification provided by the payer;
- a processing device configured to receive the unique payer identification from the identifying device and to receive the payment transaction data from the payment transaction system, which processing device is configured to process the payment transaction data into a payment transaction dataset and link them to the unique payer identification;
- a data storage system for storing and retrieving payment transaction datasets received from the processing device and linked to the unique payer identification, which stored payment transaction datasets are retrievable only by the payer, with an exception for third-party access approved explicitly by the payer.

2. System according to claim 1, wherein the data storage system is also configured so that the payer can make the stored payment transaction datasets conditionally and/or partially retrievable for third parties.

3. System according to claim 1 or 2, wherein the processing device applies a cryptographic encryption to the payment transaction dataset with a cryptographic key linked to the payer for the purpose of guaranteeing that the payment transaction dataset is retrievable only by the payer.

4. System according to any one of the foregoing claims, wherein the identifying device and the processing device are combined in the payment transaction system, such as a cash register.

5. System according to any one of the claims 1-3, wherein the identifying device and the processing device are combined in a device of the payer, such as for instance a mobile phone.

6. System according to any one of the foregoing claims, wherein the payer identification is derived by the identifying device from at least one identification source selected from one one- or two-dimensional barcode, a source to be read by means of radio waves, such as for instance a source readable by means of RFID or NFC, or a virtual or physical payment card.

7. A method for recording payment transactions from a payer to a recipient, which method comprises of:
- performing a payment transaction from a payer to a recipient on a payment transaction system, which payment transaction system records payment transaction data comprising relevant characteristics of at least one commercial offering relating to the payment transaction;
- obtaining a unique payer identification provided by the payer by means of an identifying device;
- processing the unique payer identification received from the identifying device and the payment transaction data received from the payment transaction system into a payment transaction dataset linked to the unique payer identification by means of a processing device;
- storing the payment transaction dataset received from the processing device and linked to the unique payer identification in a data storage system, which data storage system is configured to store and retrieve payment transaction datasets linked to the unique payer identification, wherein the stored payment transaction datasets are retrievable only by the payer, with an exception for third-party access approved explicitly by the payer.

8. Method according to claim 7, **characterized in that** the payer provides the unique payer identification after the payment transaction from the payer to the recipient has been carried out.

9. Method according to claim 7 or 8, wherein the payer provides the unique payer identification when carrying out successive payment transactions from the payer to recipients.

10. Method according to any one of the claims 7-9 with a device according to any one of the claims 1-6.
